# EUROPEAN PATENT SPECIFICATION

(11) **EP 2 282 574 B1**
(45) Date of publication and mention of the grant of the patent: **09.08.2017**
(21) Application number: 10165292.3
(22) Date of filing: 08.06.2010
(51) Int. Cl.: H04W 24/08, H04W 16/18, H04W 16/28

(54) **Arrangement and method for estimating network traffic based on angle of arrival determination in a cellular network**
Anordnung und Verfahren zur Beurteilung des Netzwerkverkehrs basierend auf dem Winkel der Ankunftsbestimmung in einen zellulären Netzwerk
Agencement et procédé pour estimer le trafic de réseau d'après un angle de la détermination d'arrivée dans un réseau cellulaire

(30) Priority: 07.08.2009 EP 09167508
(43) Date of publication of application: 09.02.2011
(73) Proprietor: Intel Deutschland GmbH, 85579 Neubiberg (DE)
(72) Inventor: Aue, Volker, 01326, Dresden (DE)
(74) Representative: Lippert Stachow Patentanwälte Rechtsanwälte

(56) References cited:
- EP-A1- 2 037 606
- GB-A- 2 335 570
- US-A1- 2005 024 265
- US-A1- 2008 261 614
- US-A1- 2009 143 018

## Description

### Field of the invention

The present invention relates to cellular networks and more particularly, relates to a method for estimating network traffic based on angle of arrival determination in a cellular network and to an arrangement for carrying out the method.

### Background of the invention

Cellular networks are a new form of wireless communication and are evolving rapidly. A cellular network is made up of a plurality of cells and each cell is typically served by a base station (often called a cell site) for transmitting and receiving radio frequency (RF) signals within a respective geographic area, referred to as a cell. The cell may be divided into sectors with typically one or more than one antenna covering each sector. The end users located within a certain cell use that cell site to communicate with the rest of the cellular network.

When introducing a new cellular network technology, network operators have to deliver sufficient capacity, adequate coverage and good data quality in order to make this new technology attractive for their subscribers. The 4^{th} generation communication system, which is the next generation beyond 3G communication system, is based on LTE (long term evolution) standard. This new cellular communication standard LTE provides a better spectral efficiency and thereby an increased capacity for cellular networks over already deployed 3G technology. This is achieved by combining several techniques, mainly OFDMA (orthogonal frequency division multiple access) and spatial multiplexing.

In order to quickly provide a proper capacity and coverage in a new cellular network, the conventional approach is to deploy massive base stations in the network areas. However, this massive deployment requires a tremendous investment and the return of the investment is usually low since subscribers need to be gradually convinced to embark on the new technology. Therefore, network operators are likely to opt for providing desired network coverage first and then increasing the capacity when the network gets heavily loaded by the user traffic. For keeping cost under control, additional base station equipment is installed only when the capacity bottlenecks are encountered. In a typical cellular network, the communication traffic is usually unbalanced among different areas. For instance, the capacity demand is usually high in densely populated areas, such as apartments or office buildings. By installing a base station directly within the proximity, the end users from those locations can receive the best effective services.

In order to provide satisfactory services, network operators have to ensure that each base station has sufficient frequency resources to serve all the expected traffic in its service area, without however wasting capacity. The capacity demand is often dynamic with respect to user location and traffic loading. Therefore, network operators need to estimate or monitor the distribution of network traffic in every service area of the network region in order to optimize the cell site planning. One conventional technique for estimating the distribution of network traffic is to trace the user location and performance of user equipments in the network, where the user equipments have geographical locating capabilities by themselves. Alternatively, the user location can be derived based on signal strength measurements. The user location can be also determined by triangulation between multiple base stations. Another alternative method is to estimate the traffic distribution by using traffic statistics provided by the network itself. However, these techniques are usually complicated and expensive. The estimation performance is often not good enough to provide reliable and accurate traffic information.

As the LTE capacity largely depends on the spatial characteristics, the spatial components need to be taken into account while estimating the distribution of network traffic. Angle of arrival (AoA) is a well-known measurement for determining the location of user equipment (UE) in a cellular network.

GB 2 335 570 A discloses a system for estimating the distribution of network traffic by collecting the information of angle of arrival (AoA) with directional antennas or beam forming techniques to estimate the distribution of network traffic associated with the respective angle of arrival of any signals from user equipments received at a base station in a cellular network. In this system a measurement apparatus is provided that comprises a radio receiver and a data processor coupled to said radio receiver. The data processor generates a traffic distribution profile associated with a measure of the relative activity of mobile units and base stations within a plurality of communication channels provided by the mobile radio network. The measurement apparatus may include further antennas and a beam forming processor which is controlled by the data processor in order to provide a measurement of angle of arrival (AoA) of the received radio signals. This requires a high complexity of this system.

US 2005/0024265 A1 describes a method which is suitable for locating a wireless transmitter. It can be used e.g. in emergency service systems. Therein a wireless location system is used which produces location estimations of the transmission in multiple pass location processing. A location information is produced by evaluating the quality of the estimations.

### Summary of the invention

The present invention as defined in claims 1 and 10 provides a method and an arrangement for carrying out the method for estimating the network traffic based on angle of arrival determination in a cellular network. In a typical cellular network, a cell may be served by a base station having a conventional antenna array which can be an array of directional antennas or an array of omni-directional antennas with beam forming techniques. The base station transmits radio frequency signals to a plurality of user equipments via a downlink channel and receives radio frequency signals from a plurality of user equipments via an uplink channel within the cell. An angle processing unit, which determines the angle of arrival of any signals from user equipments and acts as a location server, is communicatively linked to the base station and sends the angle of arrival information to the base station. In order to extract the angle of arrival information, the angle processing unit monitors the usage of the frequency band from each antenna of the array. The distribution of network traffic is then estimated by aggregating the angle of arrival information together with its respective user data at the base station.

The LTE standard supports both FDD (frequency division duplexing) and TDD (time division duplexing) modes. In the time domain, the time slot is fixed to 0.5 ms long which is half of a subframe. A radio frame is 10 ms long and it contains 10 subframes. In the frequency domain, the smallest resource unit is denoted as a resource element and twelve of these elements together (per slot) are called a resource block (RB) that spans 180 kHz. Furthermore, LTE employs a multiple-input/multiple-output (MIMO) antenna scheme to achieve the requirements of throughput and spectral efficiency.

In accordance with the invention, the arrangement for estimating the network traffic based on angle of arrival determination in a cellular network in which a cell is served by a base station, wherein said base station is adapted to transmit radio frequency signals to a plurality of user equipments via a downlink channel and to receive said radio frequency signals from said plurality of said user equipments via an uplink channel within said cell, comprises an antenna array of directional antennas wherein each of said directional antennas is configured to receive uplink signals coming from said user equipments at a specific direction or a phased array of omnidirectional antennas configured to receive uplink signals coming from said user equipments at specific directions; an additional downlink receiving antenna mounted on the antenna array configured to receive downlink signals from the base station; a combiner adapted to combine all received uplink signals from the directional antennas and to send the combined signal to the base station; and an angle processing unit configured to determine the angle of arrival of said radio frequency signals from said user equipments and communicatively linked to the base station.

In accordance with one feature in the arrangement for estimating the network traffic based on angle of arrival determination, the angle processing unit comprises: a plurality of signal monitoring devices that receive each of the uplink signals from the directional antennas and acquire the time slots of the downlink signals sent by the base station and received by the downlink receiving antenna; and an angle of arrival server that determines the angle of arrival of signals from user equipments and sends the angle of arrival information to the base station.

The arrangement is configured to carry out a method for estimating network traffic based on angle of arrival determination in said cellular network, which comprises: selecting a specific time slot from the downlink signals received by the downlink receiving antenna; calculating the received signal strength indication values for each of the resource blocks at the specific time slot from the uplink signals received by the antenna array by first applying a discrete Fourier transform to the samples of the selected time slot, calculating the squared absolute value over the discrete Fourier transform output, summing the squared absolute values that belong to one resource block, respectively, and presenting those as received signal strength indication values to the output.; delivering the received signal strength indication values of all the antennas to the angle of arrival server of the angle processing unit; and determining the angle of arrival of said radio frequency signals form said user equipments by monitoring said received signal strength indication values. In accordance with one feature in the method for estimating the network traffic based on angle of arrival determination, the signal processing steps include: converting the radio frequency signals acquired from both downlink and uplink to baseband by transceivers (TRXs); digitalizing the downlink and uplink signals by a pair of analog-to-digital converters; selecting the specific window of data samples from the sample streams by time synchronization; and calculating the received signal strength indication values for each of the resources blocks (RBs) by a discrete Fourier transform (DFT).

The base station supports a transmission method using more than one antenna to receive or transmit RF signals along different propagation paths, for example, using antenna diversity or multiple-input/multiple-output (MIMO) antenna scheme. In accordance with one embodiment of the invention, at least two antenna arrays are arranged for providing directional antennas with at least two receiving antennas per direction configured to receive radio frequency signals sent by user equipments. The received signal strength indication values of at least two said receiving antennas are calculated individually and then combined together.

In an alternative embodiment applicable to TDD (time division duplexing) mode, the signal processing steps further include: using control information retrieved from one of the control channels from the downlink to identify downlink and uplink transmission intervals; and providing an additional downlink/uplink switching signal to the angle processing unit to exclude downlink signals from being processed.

In accordance with an another alternative embodiment of the invention, the base station may use its own antennas for receiving and transmitting radio frequency signals from/to user equipments and the antenna array may be placed in the proximity of the base station for determining the angle of arrival of signals from user equipments and estimating the network traffic as well.

In accordance with still another alternative embodiment of the invention, the base station may employ an antenna array of omni-directional antennas with beam forming techniques for receiving radio frequency signals from user equipments. For instance, a phased array may be used for angle of arrival measurements and estimation of the network traffic.

In accordance with still another alternative embodiment of the invention, the signal processing steps further include: adding a phase shift to each of data samples by using a weight matrix after DFT processing; and estimating the received signal strength indication values for each of the resource blocks by combining the relevant absolute values of DFT outputs.

### Brief description of the drawings

The present invention and its advantages are further described in the detailed description with reference to the accompanying drawings, in which:
Fig. 1 shows a typical single sector base station;
Fig.2 shows an example of resource allocation in the frequency-time grid, received from a particular antenna in a cellular network;
Fig.3 shows an example of an antenna array having sixteen directional antennas;
Fig. 4 shows an arrangement for determining angle of arrival (AoA) of signals from user equipments in accordance with an embodiment of the present invention;
Fig. 5 shows an example of an antenna array that supports uplink antenna diversity;
Fig. 6 shows details of the angle processing unit (APU);
Fig. 7 shows details of the signal processing steps in angle processing unit (APU); and
Fig. 8 shows details of the signal processing steps in angle processing unit (APU) for a phased array.

### Detailed description of the invention

The present invention will be described with respect to a LTE cellular network, however this invention is applicable and can be applied to a variety of cellular networks and thus is not limited to a LTE cellular network.

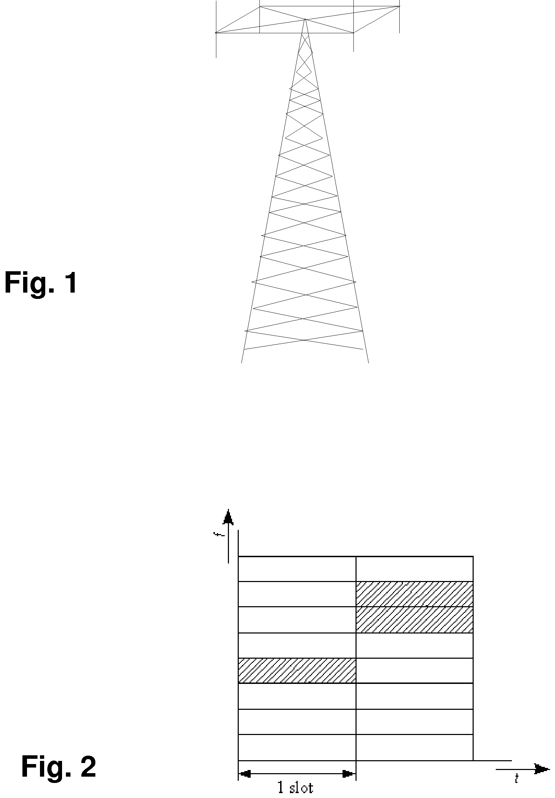

A typical cell of a cellular network has a central base station for transmitting and receiving radio frequency (RF) signals within a respective geographic area. As shown in Fig.1, a typical base station in a LTE cellular network consists of two transmitting antennas required for multiple-input/multiple-output (MIMO) and two receiving antennas for diversity reception and multi-user MIMO. The base station transmits RF signals to a plurality of user equipments (UEs) via a downlink channel and receives RF signals from a plurality of UEs via an uplink channel within the cell.

The LTE standard supports both FDD (frequency division duplexing) and TDD (time division duplexing) modes. In the time domain, a radio frame has duration of 10 ms and is divided into 20 equally sized slots of 0.5 ms. A sub-frame is defined as two consecutive slots, so one radio frame contains 10 sub-frames. In the frequency domain, one sub-carrier has bandwidth of 15 kHz and a resource block (RB) is defined as consisting of 12 sub-carriers over a slot duration of 0.5 ms, thus one resource block (RB) is 180 kHz. For FDD mode, 10 sub-frames are available for downlink transmission and 10 sub-frames are available for uplink transmission in each 10 ms interval. Uplink and downlink transmissions are separated in the frequency domain. For TDD mode, a sub-frame is either allocated to downlink or uplink transmission. Uplink and downlink transmissions alternate in the time domain using the same frequency bands.

In the uplink, data is allocated in multiples of one resource block. In FDD applications, the uplink resource block size in the frequency domain contains 12 sub-carriers and the transmission time interval is 1ms long. The uplink resource blocks are assigned to the user equipment (UE) by the base station scheduler that is called evolved Node B (eNB). Since the base station assigns certain time/frequency blocks to the UEs and informs UEs about the transmission format to use, the base station has complete knowledge of which user has used a specific frequency bin at a specific time slot. The UEs may hop from sub-frame to sub-frame. Figure 2 shows an exemplary diagram of resource allocation in the frequency-time grid, received from a particular antenna in a cellular network. As shown in Fig.2, the UE hops to another frequency allocation from one slot to another within one sub-frame.

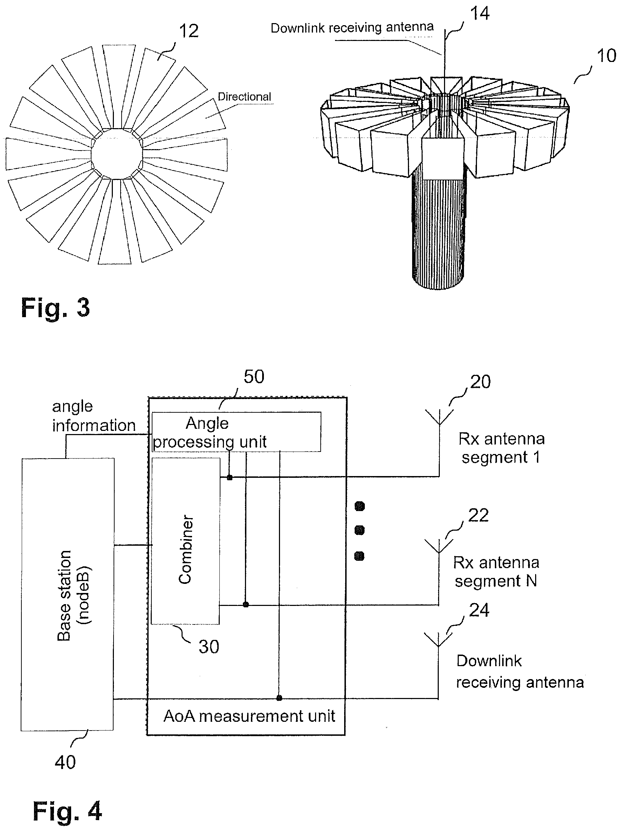

In accordance with an embodiment of the present invention, the base station may employ an antenna array having N directional antennas for receiving RF signals from a plurality of user equipments (UEs). Each of the directional antennas can receive signals coming from a specific direction. Figure 3 shows an example of an antenna array **10** having sixteen directional antennas **12** (in this case, N=16). The angle resolution is approximately 22.5°. An additional downlink receiving antenna **14** is mounted on the antenna array **10** for receiving the downlink signals from the base station.

Figure 4 shows an arrangement for determining the angle of arrival of any signals from user equipments according to an embodiment of the present invention. The antenna segments **20** to **22** correspond to the directional antennas **12** of the antenna array **10** to observe the spatial resolution. Antenna **24** corresponds to the omni-directional antenna **14** of the antenna array **10** to observe the downlink signal. Optional filters and amplifiers that are typically arranged close to each antenna are not shown for simplicity. The combiner **30** combines all the received uplink signals from antenna segments **20** to **22** and sends the combined signal to the base station **40** as if the signals were received from a single antenna. In order to determine the angle of arrival (AoA) of signals from user equipments (UEs), an angle processing unit (APU) **50** is introduced in the system to process all the received signals and send the AoA information to the base station **40.**

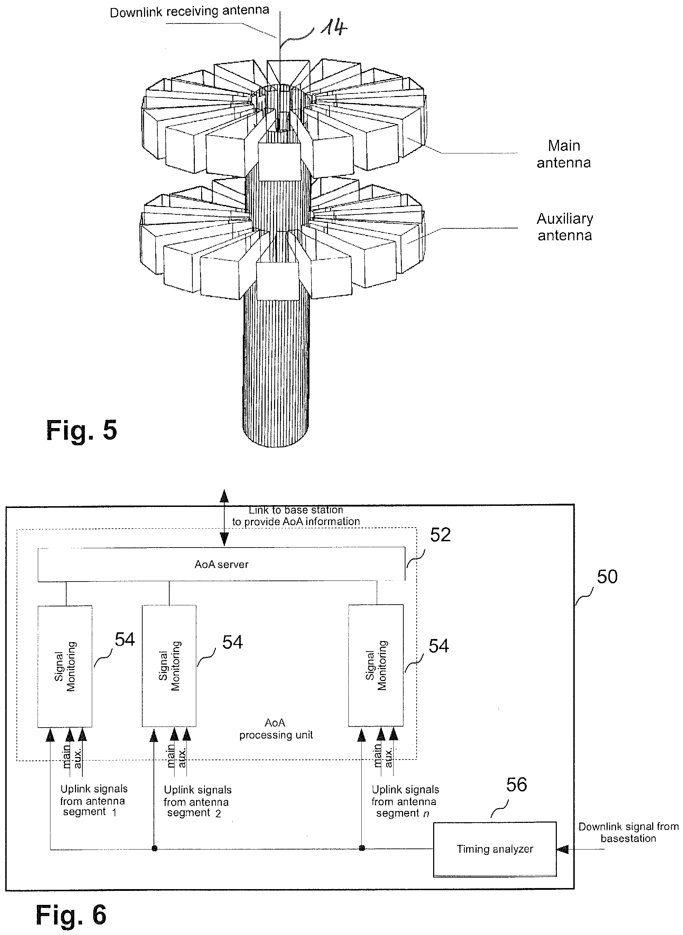

Most base stations support a transmission method using more than one antenna to receive or transmit RF signals along different propagation paths, for example, using antenna diversity or multiple-input/multiple-output (MIMO) antenna scheme. This method can provide better signal quality and increase reliability. In this invention, an example for uplink antenna diversity using two identical antenna arrays is described. Figure 5 shows an example of an antenna configuration that supports uplink receiving antenna diversity. In order to distinguish the signals coming from one antenna array or from the other, signals received from the first array are denoted as "main" and the signals from the other one are denoted as "auxiliary".

Figure 6 shows the details of angle processing unit (APU) **50** using antenna diversity for uplink transmission, for example, two receiving antennas per direction are used to receive RF signals. The APU receives two signals from each antenna segment, a main and an auxiliary signal, respectively. A plurality of signals monitoring devices **54** receive the uplink signals from each of the antenna segments before being combined together by the combiner (30 in Fig. 4) and acquire the time slots of the downlink signals sent by the base station and received by the downlink receiving antenna. The task of the signal monitoring units **54** is to provide the usage of the frequency band from each of the antenna segments. For each of uplink signals, the received signal strength indication (RSSI) value is determined by the signal monitoring units **54** for given time/frequency blocks. An angle of arrival (AoA) server **52** receives RSSI values of all the antenna segments sent by the signal monitoring units **54** and determines the angle of arrival (AoA) of signals from user equipments (UEs). The AoA information is then sent to the base station. Since the base station controls the assignment of certain time slot/frequency blocks to the user equipments (UEs), the base station can uniquely identify who of the end users has used a specific frequency bin at a specific time slot. In case the base station is asked to deliver the AoA information, it sends the request to the APU **50.** Then, the APU **50** acquires RSSI values for all particular time/frequency blocks from all the antennas and determines the AoA from the user equipments. The AoA information is then sent to the base station. An assessment of these RSSI values, e.g., triangulation, provides a good estimation of locations where user equipments are sending RF signals. The distribution of network traffic is then estimated by aggregating the AoA information together with its frequency allocations of the user equipments at the base station. A timing analyzer **56** unit receives downlink signals from the base station and provides to each of the signal monitoring units **54.**

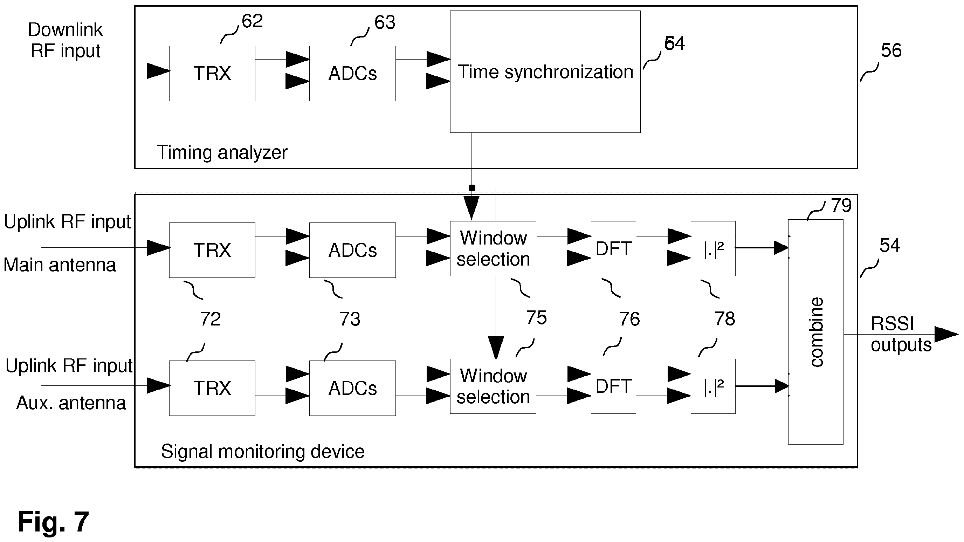

Figure 7 shows a detailed block diagram of the signal processing steps in angle processing unit (APU) for uplink antenna diversity. The RF downlink signal is first down-converted to baseband by means of a transceiver (TRX) **62** that contains suitable amplifiers, an oscillator, mixers and appropriate filters. The signal is then digitized by a pair of analog-to-digital (ADC) converters **63.** Likewise, the uplink signal received from the main antenna at a specific direction is converted to digital baseband by a TRX **72** and ADCs **73.** The time synchronization **64** of downlink and uplink data is performed by means of standard techniques that are also employed in mobile terminal devices. For a given time slot, the signal from time synchronization **64** is used to select **75** a specific window of data samples from the sample streams to be processed by a discrete Fourier transform (DFT) **76.** The squared absolute value of each DFT output is computed **68** and the relevant outputs are combined **69** to form an RSSI value for the given time slot/frequency block. Optionally, a second received signal coming from an auxiliary antenna at the same direction can be processed in the same manner. The outputs of this second path are then combined together with the outputs of the main antenna and this combined RSSI value can provide a better AoA estimation.

In an alternative embodiment applicable to TDD (time division duplexing) mode, in which uplink and downlink transmissions alternate in the time domain using the same frequency bands, a switching mechanism can be used to alternate the downlink and the uplink transmissions on the same frequency. However, the downlink time synchronization block must additionally assess the control information about the downlink and uplink periods. In LTE, this control information can be retrieved from one of the control channels from the downlink transmission. An additional signal needs to be generated and conveyed to the uplink signal processing paths to exclude downlink signals from being processed. Alternatively, a signal provided by the base station that is used to control the power amplifier in a TDD system can be used instead.

In accordance with an another alternative embodiment of the present invention, the base station may use its own antennas for receiving and transmitting RF signals from/to user equipments as shown in Fig. 1. An antenna array, as shown in Fig. 2, may be placed in the proximity of the base station for determining the angle of arrival of signals from user equipments and therefore estimating the network traffic. In this case, it is not necessary to route the signals to the base station.

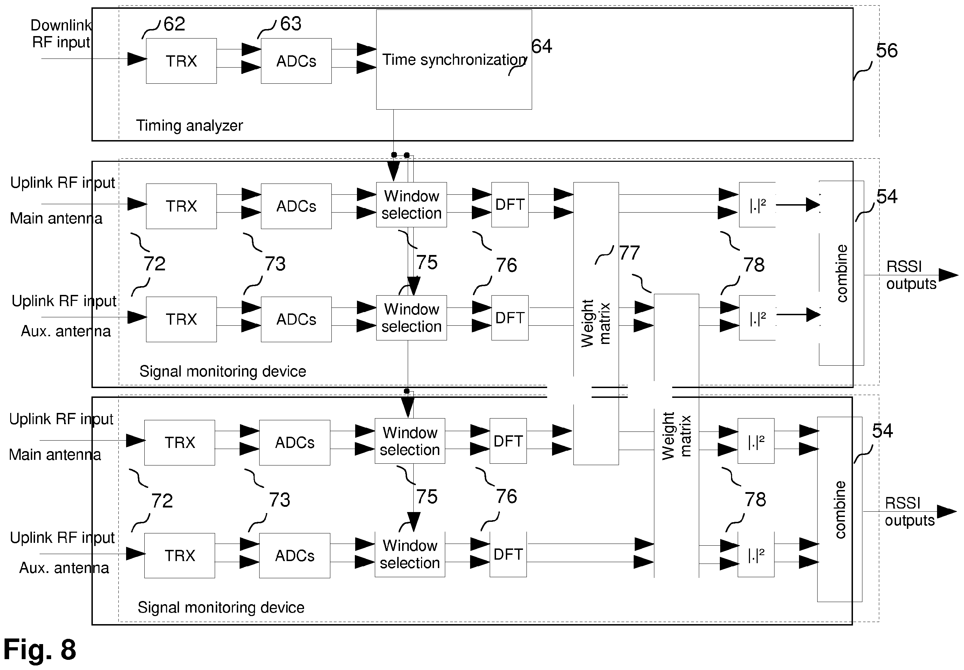

In accordance with still another alternative embodiment of the present invention, the base station may employ an antenna array having omni-directional antennas with beam forming techniques for receiving RF signals from user equipments (UEs). For instance, a phased array can be used for the angle of arrival (AoA) measurements. A phased array can be based on some omni-directional antennas that are placed on some grids. By adding a phase shift to each antenna such that signals coming from a desired direction are reinforced and signals from undesired directions are suppressed, the signal transmission or reception of the antenna array can be directed. Since the necessary phases to form a desired direction are frequency dependent, the phase weighting of different signals is best performed in baseband after DFT processing. For simplicity, Figure 8 shows the block diagram of the signal processing steps for a phased array using only two antennas with uplink antenna diversity for directive reception.

As shown in Fig. 8, the RF downlink signal is first down-converted to baseband by means of a transceiver (TRX) **62** and then digitized by a pair of analog-to-digital (ADC) converters **63.** Likewise, the uplink signals received from main antenna 1 and main antenna 2 are converted to digital baseband by a TRX **72** and ADCs **73.** The time synchronization **64** of downlink and uplink data is performed by means of standard techniques such as correlation and peak searching that are also employed in mobile terminal devices. For a given time slot, the output signal from time synchronization unit **64** is used to select **75** a specific window of data samples from the sample streams to process a discrete Fourier transform (DFT) **76.** A phase shift is added to each of data samples using a weight matrix **77** to achieve the desired direction. The squared absolute value of each DFT output is computed **78** and the relevant outputs are combined **79** to form an RSSI value for the given time slot/frequency block. Optionally, the second received signals coming from the auxiliary antenna 1 and the auxiliary antenna 2 are processed in the same manner. The outputs of this second path are then combined together with the outputs of the main antenna and this combined RSSI value can provide a better AoA estimation.

Although the present invention has been described with preferred exemplary embodiments, various changes and modifications may be made by those skilled in the art without departing from the scope of the invention as defined by the appended claims.

## Claims

1. An arrangement for estimating network traffic based on angle of arrival determination in a cellular network, the arrangement being adapted to carry out the method according to claim 10, in which a cell is served by a base station (40), wherein said base station (40) is adapted to transmit radio frequency signals to a plurality of user equipments via a downlink channel and to receive said radio frequency signals from a plurality of said user equipments via an uplink channel within said cell, the arrangement comprising:
a. an antenna array (10) of directional antennas (12, 20, 22), wherein each of said directional antennas (12, 20, 22) is configured to receive uplink signals coming from said user equipments at a specific direction or
a phased array of omnidirectional antennas configured to receive uplink signals coming from said user equipments at specific directions;
b. a downlink receiving antenna (14, 24) mounted on said antenna array (10) configured to receive downlink signals from said base station (40);
c. a combiner (30) adapted to combine all received said uplink signals from said directional antennas (12, 20, 22) and to send the combined signal to said base station (40); and
d. an angle processing unit (50) configured to determine the angle of arrival of said radio frequency signals from said user equipments and communicatively linked to said base station (40).

2. The arrangement according to claim 1, wherein said angle processing unit (50) includes:
a. a plurality of signal monitoring devices (54) adapted to receive each of said uplink signals from said directional antennas (12, 20, 22) and to acquire the time slots of said downlink signals sent by said base station (40) and received by said downlink receiving antenna (14, 24); and
b. an angle of arrival server (52) configured to determine the angle of arrival of said radio frequency signals from said user equipments by monitoring the usage of the frequency band and to deliver said angle of arrival information to said base station (40).

3. The arrangement according to claim 1 or claim 2, wherein said base station (40) is provided with complete knowledge of the time slot/frequency allocations of said user equipments in the uplink.

4. The arrangement according to any one of claims 1 to 3, wherein means for estimating network traffic by aggregating said angle of arrival information together with said time slot/frequency allocations from said user equipments at said base station (40) are arranged.

5. The arrangement according to any one of claims 1 to 4, wherein means for modulating said radio frequency signals according to LTE are arranged.

6. The arrangement according to any one of claims 1 to 4, wherein means for modulation said radio frequency signals according to GSM are arranged.

7. The arrangement according to any one of claims 1 to 6, wherein at least two antenna arrays (10) are arranged for providing said directional antennas (12, 20, 22) with at least two receiving antennas per direction configured to receive said radio frequency signals sent by said user equipments.

8. The arrangement according to any one of claims 1 to 7, wherein said directional antennas (12, 20, 22) are adapted to use multiple input/multiple output, MIMO,scheme.

9. The arrangement according to claim 1, wherein the phased array of omnidirectional antennas is adapted to use beam forming techniques to achieve directive reception.

10. A method for estimating network traffic based on angle of arrival determination in a cellular network in which a cell is served by a base station (40), wherein said base station (40) transmits radio frequency signals to a plurality of user equipments via a downlink channel and receives said radio frequency signals from a plurality of said user equipments via an uplink channel within said cell, **characterized by**
a. selecting a specific time slot from the downlink radio frequency signals received by a downlink receiving antenna (14, 24);
b. calculating the received signal strength indication values for each of the resource blocks at said specific time slot from the uplink radio frequency signals received by an antenna array (10) by;
i. first applying a discrete Fourier transform to the samples of the selected time slot,
ii. calculating the squared absolute value over the discrete Fourier transform output,
iii. summing the squared absolute values that belong to one resource block, respectively, and presenting those as received signal strength indication values to the output;
c. delivering said received signal strength indication values of all said antennas to an angle of arrival server (52) of an angle processing unit (50); and
d. determining the angle of arrival of said radio frequency signals from said user equipments by monitoring said received signal strength indication values.

11. The method according to claim 10, further comprising:
providing at least two antenna arrays (10) to provide at least two receiving antennas per direction to receive said radio frequency signals sent by said user equipments, wherein said received signal strength indication values of at least two said receiving antennas are calculated individually and then combined together.

12. The method according to claim 10 or claim 11, further comprising: retrieving control information from one of the control channels of said downlink signals in time division duplexing mode, wherein said control information is assessed to additionally identify downlink and uplink transmission intervals.

13. The method according to claim 10 or 11, further comprising: providing a downlink/uplink switching signal by said base station (40), wherein said downlink/uplink switching signal is sent to said angle processing unit (50) to exclude downlink information.

14. The method according to any one of claims 10 to 13, further comprising: adding a weight matrix after processing the discrete Fourier transform to form a desired phase shift.

## Patentansprüche

1. Anordnung zum Schätzen von Netzverkehr auf der Grundlage einer Einfallswinkelbestimmung in einem zellenbasierten Mobilfunknetz, wobei die Anordnung ausgelegt ist zum Ausführen des Verfahrens nach Anspruch 10, in dem eine Zelle von einer Basisstation (40) bedient wird,
wobei die Basisstation (40) ausgelegt ist zum Senden von Hochfrequenzsignalen zu einer Vielzahl von Benutzergeräten über einen Downlink-Kanal und zum Empfangen der Hochfrequenzsignale von einer Vielzahl der Benutzergeräte über einen Uplink-Kanal innerhalb der Zelle, wobei die Anordnung Folgendes umfasst:
a. ein Antennenarray (10) von Richtantennen (12, 20, 22), wobei jede der Richtantennen (12, 20, 22) konfiguriert ist zum Empfangen von Uplink-Signalen, die aus einer bestimmten Richtung von den Benutzergeräten kommen oder
ein phasengesteuertes Array von omnidirektionalen Antennen, das konfiguriert ist zum Empfangen von Uplink-Signalen, die aus einer bestimmten Richtung von den Benutzergeräten kommen;
b. eine Downlink-Empfangsantenne (14, 24), die auf dem Antennenarray (10) montiert ist, die konfiguriert ist zum Empfangen von Downlink-Signalen von der Basisstation (40);
c. einen Kombinierer (30), der ausgelegt ist zum Kombinieren aller empfangenen Uplink-Signale von den Richtantennen (12, 20, 22) und zum Senden des kombinierten Signals an die Basisstation (40); und
d. eine Winkelverarbeitungseinheit (50), die konfiguriert ist zum Bestimmen des Einfallswinkels der Hochfrequenzsignale von den Benutzergeräten und die kommunikativ mit der Basisstation (40) verbunden ist.

2. Anordnung nach Anspruch 1, wobei die Winkelverarbeitungseinheit (50) Folgendes beinhaltet:
a. eine Vielzahl von Signalüberwachungsvorrichtungen (54), die ausgelegt sind zum Empfangen jedes der Uplink-Signale von den Richtantennen (12, 20, 22) und zum Erfassen der Zeitschlitz der Downlink-Signale, die von der Basisstation (40) gesendet und von der Downlink-Empfangsantenne (14, 24) empfangen wurden; und
b. einen Einfallswinkelserver (52), der konfiguriert ist zum Bestimmen des Einfallswinkels der Hochfrequenzsignale von den Benutzergeräten durch Überwachen der Nutzung des Frequenzbands und zum Liefern der Einfallswinkelinformationen an die Basisstation (40).

3. Anordnung nach Anspruch 1 oder Anspruch 2, wobei die Basisstation (40) mit vollständiger Kenntnis der Zeitschlitz-/Frequenzzuweisungen der Benutzergeräte im Uplink versehen ist.

4. Anordnung nach einem der Ansprüche 1 bis 3, wobei Mittel zum Schätzen von Netzverkehr durch Zusammenfügen der Einfallswinkelinformationen zusammen mit den Zeitschlitz-/Frequenzzuweisungen der Benutzergeräte an der Basisstation (40) angeordnet sind.

5. Anordnung nach einem der Ansprüche 1 bis 4, wobei Mittel zum Modulieren der Hochfrequenzsignale gemäß LTE angeordnet sind.

6. Anordnung nach einem der Ansprüche 1 bis 4, wobei Mittel zum Modulieren der Hochfrequenzsignale gemäß GSM angeordnet sind.

7. Anordnung nach einem der Ansprüche 1 bis 6, wobei mindestens zwei Antennenarrays (10) angeordnet sind zum Bereitstellen der Richtantennen (12, 20, 22) mit mindestens zwei Empfangsantennen pro Richtung, die konfiguriert sind zum Empfangen der Hochfrequenzsignale, die von den Benutzergeräten gesendet werden.

8. Anordnung nach einem der Ansprüche 1 bis 7, wobei die Richtantennen (12, 20, 22) ausgelegt sind zum Verwenden eines Mehrfacheingang-/Mehrfachausgang(MIMO) - Schemas.

9. Anordnung nach Anspruch 1, wobei das phasengesteuerte Array von omnidirektionalen Antennen ausgelegt ist zum Verwenden von Strahlformungstechniken, um gerichteten Empfang zu erreichen.

10. Verfahren zum Schätzen von Netzverkehr auf der Grundlage einer Einfallswinkelbestimmung in einem zellenbasierten Mobilfunknetz, in dem eine Zelle von einer Basisstation (40) bedient wird,
wobei die Basisstation (40) Hochfrequenzsignale zu einer Vielzahl von Benutzergeräten über einen Downlink-Kanal sendet und die Hochfrequenzsignale von einer Vielzahl der Benutzergeräte über einen Uplink-Kanal innerhalb der Zelle empfängt, **gekennzeichnet durch**
a. Auswählen eines bestimmten Zeitschlitzes aus den Downlink-Hochfrequenzsignalen, die von einer Downlink-Empfangsantenne (14, 24) empfangen werden;
b. Berechnen der Empfangssignalstärkeanzeigewerte für jeden der Ressourcenblöcke in dem bestimmten Zeitschlitz aus den Uplink-Hochfrequenzsignalen, die von einem Antennenarray (10) empfangen wurden, **durch**:
i. zuerst Anwenden einer diskreten Fourier-Transformation auf die Proben des ausgewählten Zeitschlitzes,
ii. Berechnen des quadratischen Absolutwerts über die Ausgabe der diskreten Fourier-Transformation,
iii. Summieren der quadratischen Absolutwerte, die jeweils zu einem Ressourcenblock gehören, und Präsentieren dieser als Empfangssignalstärkeanzeigewerte am Ausgang;
c. Liefern der Empfangssignalstärkeanzeigewerte von allen Antennen an einen Einfallswinkelserver (52) einer Winkelverarbeitungseinheit (50); und
d. Bestimmen des Einfallswinkels der Hochfrequenzsignale von den Benutzergeräten **durch** Überwachen der Empfangssignalstärkeanzeigewerte.

11. Verfahren nach Anspruch 10, das ferner den folgenden Schritt umfasst:
Bereitstellen von mindestens zwei Antennenarrays (10) zum Bereitstellen von mindestens zwei Empfangsantennen pro Richtung, um die Hochfrequenzsignale, die von den Benutzergeräten gesendet werden, zu empfangen, wobei die Empfangssignalstärkeanzeigewerte von mindestens zwei Empfangsantennen einzeln berechnet und dann kombiniert werden.

12. Verfahren nach Anspruch 10 oder Anspruch 11, das ferner den folgenden Schritt umfasst: Abrufen von Steuerinformationen von einem der Steuerkanäle der Downlink-Signale im Zeitschlitzduplexmodus, wobei die Steuerinformationen begutachtet werden, um zusätzlich Downlink- und Uplink-Sendeintervalle zu identifizieren.

13. Verfahren nach Anspruch 10 oder 11, das ferner den folgenden Schritt umfasst: Bereitstellen eines Downlink-/Uplink-Umschaltsignals durch die Basisstation (40), wobei das Downlink-/Uplink-Umschaltsignal an die Winkelverarbeitungseinheit (50) gesendet wird, um Downlink-Informationen auszuschließen.

14. Verfahren nach einem der Ansprüche 10 bis 13, das ferner den folgenden Schritt umfasst: Hinzufügen einer Gewichtungsmatrix nach dem Verarbeiten der diskreten Fourier-Transformation, um eine gewünschte Phasenverschiebung auszubilden.

## Revendications

1. Agencement pour estimer un trafic de réseau en fonction d'une détermination d'angle d'arrivée dans un réseau cellulaire, l'agencement étant adapté pour effectuer le procédé selon la revendication 10, dans lequel une cellule est servie par une station de base (40),
dans lequel ladite station de base (40) est adaptée pour transmettre des signaux de radiofréquence à une pluralité d'équipements utilisateur par l'intermédiaire d'un canal de liaison descendante et pour recevoir lesdits signaux de radiofréquence à partir d'une pluralité desdits équipements utilisateur par l'intermédiaire d'un canal de liaison montante à l'intérieur de ladite cellule, l'agencement comprenant :
a. un réseau d'antennes (10) d'antennes directionnelles (12, 20, 22), dans lequel chacune desdites antennes directionnelles (12, 20, 22) est configurée pour recevoir des signaux de liaison montante provenant desdits équipements utilisateur dans une direction spécifique ou
un réseau à commande de phase d'antennes omnidirectionnelles configurées pour recevoir des signaux de liaison montante provenant desdits équipements utilisateur dans des directions spécifiques ;
b. une antenne de réception de liaison descendante (14, 24) montée sur ledit réseau d'antennes (10), configurée pour recevoir des signaux de liaison descendante à partir de ladite station de base (40) ;
c. un combineur (30) adapté pour combiner tous lesdits signaux de liaison montante reçus à partir desdites antennes directionnelles (12, 20, 22) et pour envoyer le signal combiné à ladite station de base (40) ; et
d. une unité de traitement d'angle (50) configurée pour déterminer l'angle d'arrivée desdits signaux de radiofréquence à partir desdits équipements utilisateur et liée en communication à ladite station de base (40).

2. Agencement selon la revendication 1, dans lequel ladite unité de traitement d'angle (50) inclus :
a. une pluralité de dispositifs de surveillance de signal (54) adaptés pour recevoir chacun desdits signaux de liaison montante à partir desdites antennes directionnelles (12, 20, 22) et pour acquérir les intervalles de temps desdits signaux de liaison descendante envoyés par ladite station de base (40) et reçus par ladite antenne de réception de liaison descendante (14, 24) ; et
b. un serveur d'angle d'arrivée (52) configuré pour déterminer l'angle d'arrivée desdits signaux de radiofréquence à partir desdits équipements utilisateur en surveillant l'usage de la bande de fréquence et pour livrer lesdites informations d'angle d'arrivée à ladite station de base (40).

3. Agencement selon la revendication 1 ou la revendication 2, dans lequel ladite station de base (40) possède une connaissance complète des attributions d'intervalle de temps/de fréquence desdits équipements utilisateur dans la liaison montante.

4. Agencement selon l'une quelconque des revendications 1 à 3, dans lequel des moyens pour estimer un trafic de réseau en agrégeant lesdites informations d'angle d'arrivée conjointement avec lesdites attributions d'intervalle de temps/de fréquence à partir desdits équipements utilisateur au niveau de ladite station de base (40) sont agencés.

5. Agencement selon l'une quelconque des revendications 1 à 4, dans lequel des moyens pour moduler lesdits signaux de radiofréquence selon LTE sont agencés.

6. Agencement selon l'une quelconque des revendications 1 à 4, dans lequel des moyens pour modulation desdits signaux de radiofréquence selon GSM sont agencés.

7. Agencement selon l'une quelconque des revendications 1 à 6, dans lequel au moins deux réseaux d'antennes (10) sont agencés pour fournir auxdites antennes directionnelles (12, 20, 22) au moins deux antennes de réception par direction, configurées pour recevoir lesdits signaux de radiofréquence envoyés par lesdits équipements utilisateur.

8. Agencement selon l'une quelconque des revendications 1 à 7, dans lequel lesdites antennes directionnelles (12, 20, 22) sont adaptées pour utiliser un système à entrées multiples/sorties multiples, MIMO.

9. Agencement selon la revendication 1, dans lequel le réseau à commande de phase d'antennes omnidirectionnelles est adapté pour utiliser des techniques de formation de faisceau pour accomplir une réception directive.

10. Procédé pour estimer un trafic de réseau en fonction d'une détermination d'angle d'arrivée dans un réseau cellulaire dans lequel une cellule est servie par une station de base (40), dans lequel ladite station de base (40) transmet des signaux de radiofréquence à une pluralité d'équipements utilisateur par l'intermédiaire d'un canal de liaison descendante et reçoit lesdits signaux de radiofréquence à partir d'une pluralité desdits équipements utilisateur par l'intermédiaire d'un canal de liaison montante à l'intérieur de ladite cellule, **caractérisé par**
a. la sélection d'un intervalle de temps spécifique à partir des signaux de radiofréquence de liaison descendante reçus par une antenne de réception de liaison descendante (14, 24) ;
b. le calcul des valeurs d'indication d'intensités de signaux reçus pour chacun des blocs de ressources audit intervalle de temps spécifique à partir des signaux de radiofréquence de liaison montante reçus par un réseau d'antennes (10) en :
i. en premier, appliquant une transformée de Fourier discrète sur les échantillons de l'intervalle de temps sélectionné,
ii. calculant la valeur absolue au carré sur le résultat de transformée de Fourier discrète,
iii. additionnant les valeurs absolues au carré qui appartiennent à un bloc de ressources, respectivement, et présentant celles-ci en tant que valeurs d'indication d'intensités de signaux reçus au résultat ;
c. la livraison desdites valeurs d'indication d'intensités de signaux reçus de toutes lesdites antennes à un serveur d'angle d'arrivée (52) d'une unité de traitement d'angle (50) ; et
d. la détermination de l'angle d'arrivée desdits signaux de radiofréquence à partir desdits équipements utilisateur en surveillant lesdites valeurs d'indication d'intensités de signaux reçus.

11. Procédé selon la revendication 10, comprenant en outre :
la fourniture d'au moins deux réseaux d'antennes (10) pour fournir au moins deux antennes de réception par direction pour recevoir lesdits signaux de radiofréquence envoyés par lesdits équipements utilisateur, dans lequel lesdites valeurs d'indication d'intensités de signaux reçus d'au moins deux dites antennes de réception sont calculées individuellement et puis combinées ensemble.

12. Procédé selon la revendication 10 ou la revendication 11, comprenant en outre : la récupération d'informations de commande à partir de l'un des canaux de commande desdits signaux de liaison descendante en mode de duplexage par répartition dans le temps, dans lequel lesdites informations de commande sont évaluées pour identifier en outre des intervalles de transmission de liaison descendante et de liaison montante.

13. Procédé selon la revendication 10 ou 11, comprenant en outre : la fourniture d'un signal de commutation de liaison descendante/de liaison montante par ladite station de base (40), dans lequel ledit signal de commutation de liaison descendante/de liaison montante est envoyé à ladite unité de traitement d'angle (50) pour exclure des informations de liaison descendante.

14. Procédé selon l'une quelconque des revendications 10 à 13, comprenant en outre :
l'addition d'une matrice de poids après le traitement de la transformée de Fourier discrète pour former un déphasage souhaité.
